# EUROPÄISCHE PATENTSCHRIFT

(11) **EP 3 787 155 B1**
(45) Veröffentlichungstag und Bekanntmachung des Hinweises auf die Patenterteilung: **19.11.2025**
(21) Anmeldenummer: 20192430.5
(22) Anmeldetag: 24.08.2020
(51) Int. Cl.: H02K 1/28, H02K 7/00

(54) **WELLE SOWIE ROTOR FÜR EINE ELEKTRISCHE MASCHINE, ELEKTRISCHE MASCHINE, FAHRZEUG UND HERSTELLUNGSVERFAHREN FÜR EINEN ROTOR**
SHAFT AND ROTOR FOR AN ELECTRIC MACHINE, ELECTRIC MACHINE, VEHICLE AND MANUFACTURING METHOD FOR A ROTOR
ARBRE AINSI QUE ROTOR POUR UNE MACHINE ÉLECTRIQUE, MACHINE ÉLECTRIQUE, VÉHICULE ET PROCÉDÉ DE FABRICATION POUR UN ROTOR

(30) Priorität: 28.08.2019 DE 102019123032
(43) Veröffentlichungstag der Anmeldung: 03.03.2021
(73) Patentinhaber: Valeo eAutomotive Germany GmbH, 91056 Erlangen (DE)
(72) Erfinder: BACH, Regina, 97640 Hendungen (DE)

(56) Entgegenhaltungen:
- CN-A- 105 471 144
- CN-U- 205 566 057
- DE-A1- 102016 200 102
- FR-A1- 3 046 306
- JP-B2- 5 945 485
- US-A1- 2015 069 879
- US-A1- 2015 377 282
- US-A1- 2017 167 463

## Beschreibung

Die vorliegende Erfindung betrifft eine Welle für eine elektrische Maschine, umfassend einen Paketsitz für ein Blechpaket und zwei sich vom Paketsitz in entgegengesetzte Richtungen axial nach außen erstreckende Wellenenden.

Daneben betrifft die Erfindung ein Rotorblech für eine elektrische Maschine, einen Rotor für eine elektrische Maschine, ein Verfahren zur Herstellung eines Rotors, eine elektrische Maschine und ein Fahrzeug.

DE 10 2017 001 987 A1 offenbart einen Rotor für eine elektrische Maschine mit einer Rotorwelle und einem auf der Rotorwelle angeordneten Blechpaket, welches mittels eines zumindest in jeweiligen Längenbereichen der Rotorwelle und des Blechpakets ausgebildeten Presssitzes drehfest mit der Rotorwelle verbunden ist.

Dazu ist im Längenbereich der Rotorwelle eine Außenverzahnung vorgesehen, in die eine korrespondierende Innenverzahnung im Längenbereich des Blechpakets eingreift.

Eine solche korrespondierende Verzahnung ist schwierig herzustellen und schwächt die mechanische Stabilität des Blechpakets, was eine Übertragung von Drehmomenten auf die Welle verringert.

CN 205 566 057 U offenbart eine sechseckige Welle mit den Merkmalen des kennzeichnenden Teils von Anspruch 1.

Der Erfindung liegt mithin die Aufgabe zugrunde, eine demgegenüber verbesserte Möglichkeit zur Verbindung einer Welle mit einem Blechpaket anzugeben.

Zur Lösung dieser Aufgabe ist erfindungsgemäß eine Welle gemäß Anspruch 1 vorgesehen.

Die Erfindung beruht auf der Überlegung, den Paketsitz mit dem Polygonprofil auszustatten, welches vorteilhafterweise einfach herstellbar ist und keine mechanische Schwächung eines aufzubringenden Blechpakets durch eine Verzahnung und dergleichen erfordert. So wird eine Drehmomentübertragung zwischen dem Blechpaket und der Welle erheblich erhöht und die mechanische Stabilität der Verbindung zwischen der Welle und dem Blechpaket verbessert.

Unter einem Polygonprofil ist im Sinne der Erfindung nicht ausschließlich ein mehreckiges Profil mit geraden Seiten im Sinne eines Dreiecks oder eines Quadrats zu verstehen. Vielmehr umfasst der Begriff auch das Profil einer Polygonverbindung im Sinne der DIN 32711 und der DIN 32712. Das Polygonprofil kann daher insbesondere ein P3G-Profil oder ein P4C-Profil sein.

Im Detail ist bei der erfindungsgemäßen Welle vorgesehen, dass ein regelmäßiges Innen-N-eck mit N ≥ 3 in das Polygonprofil einbeschrieben ist und das Polygonprofil in einen Umkreis, den jede Ecke des Innen-N-ecks berührt, einbeschrieben ist. Das Innen-N-Eck kann beispielsweise ein Innendreieck, ein Innenviereck, ein Innenfünfeck oder ein Innensechseck sein. Typischerweise ist N ≤ 12, insbesondere N ≤ 10, insbesondere N ≤ 6.

Für ein exzentrisches Polygonprofil ist vorgesehen, dass ein zum Umkreis konzentrischer Inkreis in das Polygonprofil einbeschrieben ist und auf einer jeweiligen Seite des Innen-N-eck eine Sehne des Inkreises verläuft.

Als besonders vorteilhaft erweist sich die Verwendung eines Polygonprofils bei einer Welle für einen gestaffelten Rotor. Dazu kann vorgesehen sein, dass der Paketsitz zwei Paketsitzabschnitte aufweist, die zueinander in Umfangsrichtung versetzt sind. Der Versatz ist insbesondere kleiner als 360°·N⁻¹. Es kann dabei ein Absatz zwischen den Paketsitzabschnitten ausgebildet werden. Typischerweise grenzen die Paketsitzabschnitte unmittelbar aneinander an.

Im Hinblick auf die Herstellung eines gestaffelten Rotors wird durch die zueinander versetzten Paketsitzabschnitte eine einfache Herstellung ermöglicht, indem Einzelbleche von beiden Seiten der Welle auf einen Paketsitzabschnitt geschoben werden, wegen des Absatzes an den anderen Paketsitzabschnitt anschlagen und so automatisch die richtige Ausrichtung zueinander einnehmen, weil eine Verdrehung der Einzelbleche gegeneinander durch das Polygonprofil verhindert wird. Dies ist insbesondere vorteilhaft im Vergleich zu herkömmlichen Techniken, bei denen zunächst aus Einzelblechen korrekt ausgerichtete Blechpakete gepackt und dann im korrekten Winkel zueinander auf die Welle gefügt werden müssen. Mithin kann die Fehleranfälligkeit der Rotormontage verringert werden.

Typischerweise liegt eine Gerade, die in axialer Erstreckung eines jeweiligen Paketsitzabschnitts auf einer der Ecken liegt, parallel zur Mittelachse der Welle. Dabei kann ferner eine Schraubenkurve, die an einem jeweiligen Paketsitzabschnitt die Ecke an einer mittigen Axialposition des Paketsitzabschnitts berührt, mit der Geraden einen Winkel einschließt. Dieser Winkel kann dann den Staffelungswinkel ausbilden.

Die der Erfindung zugrunde liegende Aufgabe wird ferner gelöst durch einen Rotor für eine elektrische Maschine, umfassend eine erfindungsgemäße Welle und ein aus geschichteten erfindungsgemäßen Rotorblechen gebildetes Rotorblechpaket, wobei die mittigen Durchgangsöffnungen auf dem Paketsitz aufsitzen.

Die der Erfindung zugrunde liegende Aufgabe wird daneben durch ein Verfahren zur Herstellung eines erfindungsgemäßen Rotors gelöst, wobei die Durchgangsöffnungen eines jeweiligen Rotorblechs über den Paketsitz geführt werden.

Typischerweise werden die Rotorbleche nach dem Führen über den Paketsitz auf diesen aufgeschrumpft.

Sämtliche Ausführungen zur erfindungsgemäßen Welle lassen sich analog auf das erfindungsgemäße Verfahren übertragen, so dass auch mit diesem die zuvor beschriebenen Vorteile erzielt werden können.

Die der Erfindung zugrunde liegende Aufgabe wird ferner gelöst durch eine elektrische Maschine, umfassend einen erfindungsgemäßen Rotor oder einen durch das erfindungsgemäße Verfahren erhaltenen Rotor, wobei der Rotor drehbar innerhalb eines Stators der elektrischen Maschine gelagert ist.

Dabei kann insbesondere vorgesehen sein, dass der Stator Z Statorzähne aufweist und der Winkel zwischen 360°·(r-1) r⁻¹·Z⁻¹ und 360°·(r+1) r⁻¹·Z⁻¹ liegt, wobei r ≥ 2, insbesondere r ≥ 10, eine reelle Zahl ist.

Die elektrische Maschine ist typischerweise permanenterregt oder fremderregt und/oder eine Synchronmaschine.

Die der Erfindung zugrunde liegende Aufgabe wird außerdem durch ein Fahrzeug gelöst, umfassend eine erfindungsgemäße elektrische Maschine, die zum Antreiben des Fahrzeugs eingerichtet ist.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1 und 2: jeweils eine perspektivische Darstellung eines ersten Ausführungsbeispiels der erfindungsgemäßen Welle;
- Fig. 3: eine Prinzipskizze eines Ausführungsbeispiels des erfindungsgemäßen Rotorblechs;
- Fig. 4: eine Prinzipskizze eines ersten Ausführungsbeispiels der erfindungsgemäßen elektrischen Maschine mit einem ersten Ausführungsbeispiel des erfindungsgemäßen Rotors;
- Fig. 5 und 6: jeweils eine perspektivische Darstellung eines zweiten Ausführungsbeispiels einer nicht erfindungsgemäßen Welle;
- Fig. 7: eine Prinzipskizze eines zweiten Ausführungsbeispiels der nicht erfin-dungsgemäßen elektrischen Maschine mit einem zweiten Ausführungsbeispiel eines nicht erfindungsgemäßen Rotors; und
- Fig. 8: eine Prinzipskizze eines Ausführungsbeispiels des erfindungsgemäßen Fahrzeugs.

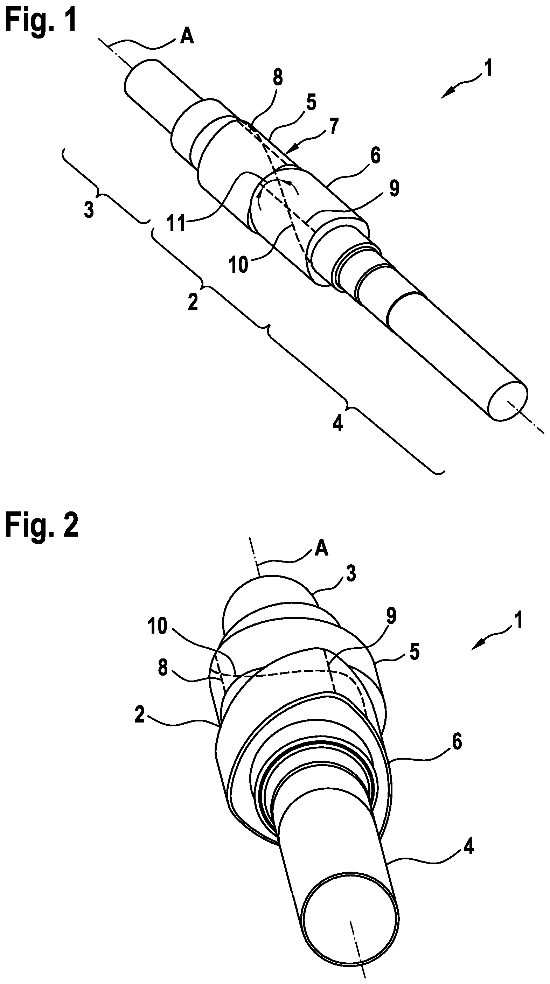

Fig. 1 und Fig. 2 sind jeweils eine perspektivische Darstellung eines ersten Ausführungsbeispiels einer Welle 1.

Die Welle 1 weist einen Paketsitz 2 und zwei sich vom Paketsitz 2 in entgegengesetzte Richtungen axial nach außen erstreckende Wellenenden 3, 4 auf. Dabei ist das Wellenende 4 an einer Abtriebsseite der Welle 1 angeordnet.

Der Paketsitz 2 umfasst einen ersten Paketsitzabschnitt 5 und einen zweiten Paketsitzabschnitt 6, die sich jeweils in axialer Richtung erstrecken und ein Polygonprofil aufweisen. Die Paketsitzabschnitte 5, 6 sind dabei in Umfangsrichtung zueinander versetzt. Die Polygonprofile sind jeweils P3G-Profile nach DIN 32711 und weisen dementsprechend drei exzentrische Ausbuchtungen 7 auf. Das Polygonprofil erstreckt sich dabei axial gerade entlang des jeweiligen Paketsitzabschnitts 5, 6, sodass eine jeweilige Ausbuchtung 7 sich entlang einer Geraden 8, 9 erstreckt, die parallel zu einer Mittelachse A der Welle 1 verläuft. An mittigen Axialpositionen der Paketsitzabschnitte 5, 6 liegen die Geraden 8, 9 jeweils auf einer Schraubenkurve 10 mit konstanter Ganghöhe. Die Schraubenkurve 10 schneidet die Geraden 8, 9 unter einem Winkel 11.

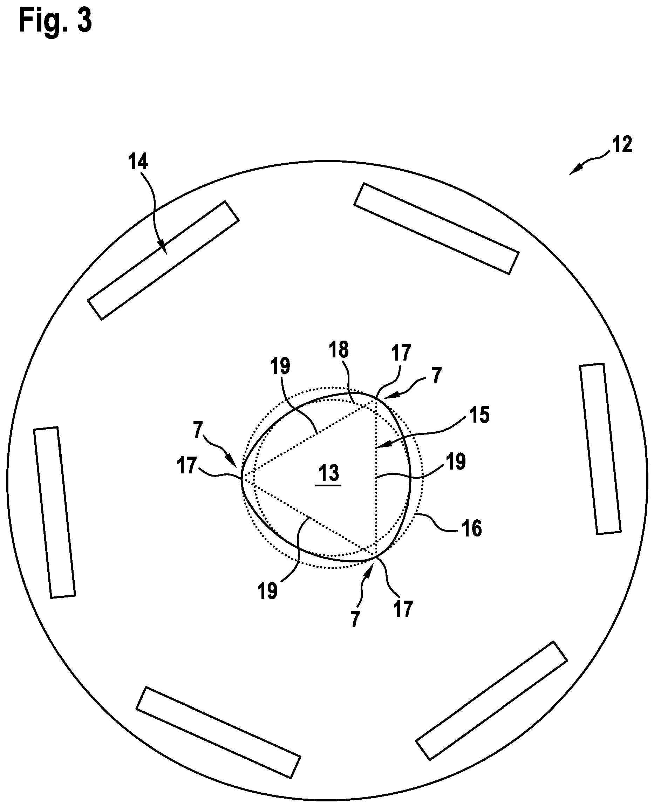

Fig. 3 ist eine Prinzipskizze eines Ausführungsbeispiels eines Rotorblechs 12.

Das Rotorblech 12 weist eine mittige Durchgangsöffnung 13 mit einem Polygonprofil auf. Daneben umfasst das Rotorblech 12 eine Vielzahl von weiteren Durchgangsöffnungen 14, die sich jeweils an der gleichen Radialposition befinden und in Umfangsrichtung zueinander um einen festen Winkel äquidistant versetzt sind. Jede Durchgangsöffnungen 14 dient zum Ausbilden eine Magnettasche für einen Permanentmagneten, wenn mehrere Rotorbleche 12 zu einem Rotorblechpaket geschichtet werden.

Daneben zeigt Fig. 3 einige geometrische Eigenschaften des Polygonprofils, die insofern auch für das Polygonprofil des ersten Ausführungsbeispiels der Welle 1 (siehe Fig. 1 und 2) gelten. In das Polygonprofil ist ein regelmäßiges Innendreieck 15 einbeschrieben und das Polygonprofil selbst ist in einen Umkreis 16 einbeschrieben, der jede Ecke 17 des Innendreiecks 15 berührt. Die jeweilige Position der Ecken 17 entspricht dabei der Position der Ausbuchtungen 7. Die Exzentrizität des Polygonprofils ergibt sich dadurch, dass in dieses ein mit dem Umkreis 16 konzentrischer Inkreis 18 einbeschrieben ist und auf einer jeweiligen Seite 19 des Innendreiecks 15 eine Sehne des Innenkreises 18 verläuft.

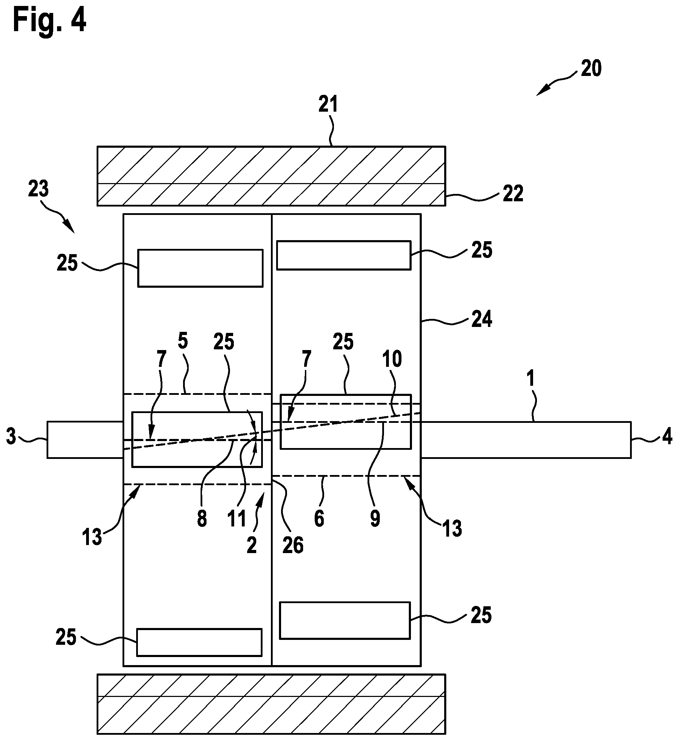

Fig. 4 ist eine Prinzipskizze eines ersten Ausführungsbeispiels einer elektrischen Maschine 20.

Die elektrische Maschine 20 ist vorliegend eine permanenterregte Synchronmaschine und umfasst einen Stator 21 mit einer Anzahl Z Statorzähnen 22.

Daneben umfasst elektrische Maschine 20 ein Ausführungsbeispiel eines Rotors 23. Der Rotor 23 umfasst das erste Ausführungsbeispiel der Welle 1 und ein aus geschichteten Rotorblechen 12 gemäß dem Ausführungsbeispiel in Fig. 3 gebildetes Rotorblechpaket 24. Dabei sitzen die mittigen Durchgangsöffnungen 13 eines jeweiligen Rotorblechs 12 auf einem jeweiligen Paketsitzabschnitt 5, 6 auf. Die Rotorbleche 12 sind deckungsgleich zueinander geschichtet, sodass Magnettaschen für Permanentmagnete 25 des Rotors 23 ausgebildet sind.

Beim Rotor 23 handelt es sich mithin um einen gestaffelten Rotor, dessen Staffelungswinkel dem Winkel 11 zwischen der Geraden 8 bzw. 9 und der Schraubenkurve 10 entspricht.

Gemäß einem ersten Ausführungsbeispiel eines Verfahrens zur Herstellung des Rotors 23 gemäß Fig. 4 werden die Durchgangsöffnungen 13 eines jeweiligen Rotorblechs 12 über den Paketsitz 2 geführt. Dabei werden die Rotorbleche 12 für den ersten Paketsitzabschnitt 5 vom Wellenende 3 und die Rotorbleche 12 für den zweiten Paketsitzabschnitt 6 vom Wellenende 4 aus über den Paketsitz 2 geführt, wobei ein jeweils als Erstes über den Paketsitz 2 geführtes Rotorblech 12 an einem Absatz 26, der durch den Versatz zwischen den Paketsitz Abschnitten 5, 6 gebildet ist, anschlägt. Wegen der gegengleichen Polygonprofile der Paketsitzabschnitte 5, 6 einerseits und der Rotorbleche 12 andererseits wird so ein unerwünschtes Verdrehen der Rotorbleche 12 vermieden.

Das Fügen der Rotorbleche 12 und der Welle 1 erfolgt durch Aufschrumpfen. Dazu werden vor dem Führen der Rotorbleche 12 über den Paketsitz 2 die Rotorbleche 12 erwärmt und/oder die Welle 1 abgekühlt, sodass das Polygonprofil der Rotorbleche 12 geringfügig weiter als jenes der Welle 1 ist. Anschließend werden die Temperaturen der Welle 1 und der Rotorbleche 12 angeglichen und die Rotorbleche 12 mit der Welle 1 verfügt.

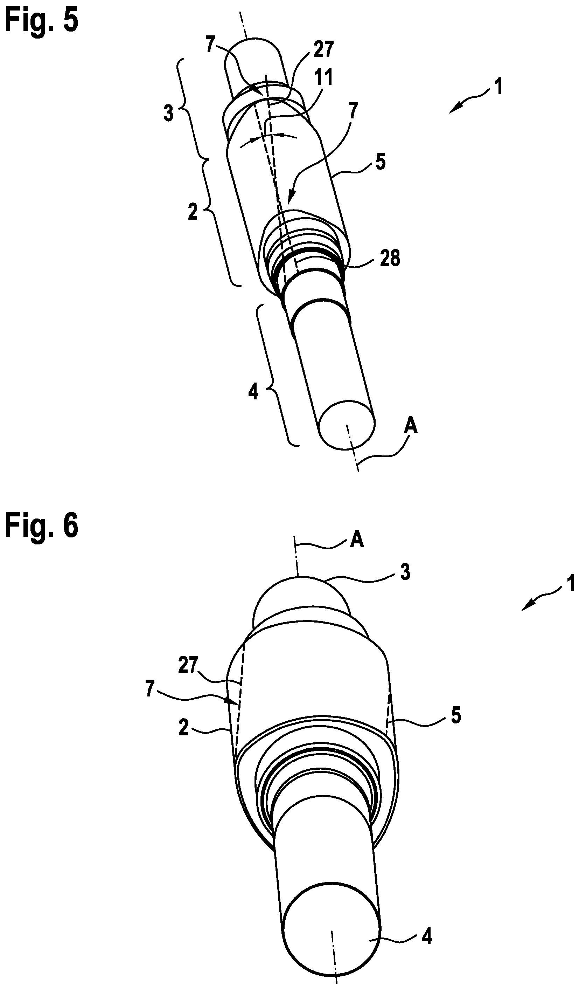

Fig. 5 und Fig. 6 sind jeweils eine perspektivische Darstellung eines zweiten Ausführungsbeispiels einer Welle 1, für die alle Ausführungen zum ersten Ausführungsbeispiel gemäß Fig. 1 und Fig. 2 analog gelten, sofern im Folgenden nichts Abweichendes beschrieben ist. Dabei sind gleiche oder gleichwirkende Komponenten mit identischen Bezugszeichen versehen.

Der Paketsitz 2 der Welle 1 ist durch einen Paketsitzabschnitt 5 gebildet, dessen Polygonprofil axial geschrägt verläuft. Das heißt, dass die Positionen in Umfangsrichtung einer Ausbuchtungen 7 am zum Wellenende 3 weisenden Ende des Paketsitzes 2 und einer Ausbuchtung 7 am zum Wellenende 4 weisenden Ende des Paketsitzes 2 zueinander versetzt sind. Dementsprechend liegt die axiale Erstreckung einer jeweiligen Ecke 17 (siehe Fig. 3) auf einer Geraden 27, die mit einer zur Mittelachse A der Welle 1 parallelen Geraden 28 einen Winkel 11 einschließt.

Die geometrischen Ausführungen zum Polygonprofil des Rotorblechs 12 in Fig. 3 lassen sich analog auf das Polygonprofil des zweiten Ausführungsbeispiels der Welle 1 übertragen.

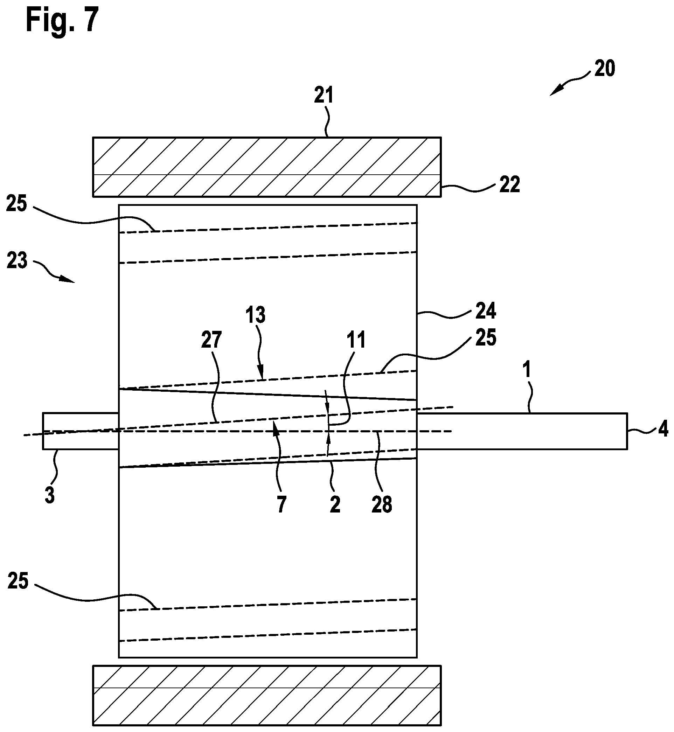

Fig. 7 ist eine Prinzipskizze eines zweiten Ausführungsbeispiels einer elektrischen Maschine 20, dass dem ersten Ausführungsbeispiel gemäß Fig. 4 entspricht, sofern im Folgenden nichts Abweichendes beschrieben ist. Dabei sind gleiche oder gleichwirkende Komponenten mit identischen Bezugszeichen versehen.

Die elektrische Maschine 20 umfasst ein zweites Ausführungsbeispiel eines Rotors 23, der als geschrägter Rotor ausgebildet ist. Das Blechpaket 24 des Rotors 23 ist dabei durch Rotorbleche 12 gemäß dem Ausführungsbeispiel in Fig. 3 ausgebildet, die zu ihrem Vorgänger jeweils einen konstanten Versatz in Umfangsrichtung aufweisen. Dadurch werden entsprechend schräglaufende Magnetaschen ausgebildet, in denen die Permanentmagnete 25 angeordnet sind. Der Winkel 11 entspricht hierbei einem Schrägungswinkel des Rotors 23, der durch die Geraden 27, 28 eingeschlossen ist.

Gemäß einem zweiten Ausführungsbeispiel eines Verfahren zur Herstellung eines Rotors gemäß Fig. 7 werden die Durchgangsöffnungen 13 eines jeweiligen Rotorblechs 12 über den Paketsitz 2 geführt, was von einem beliebigen Ende des Paketsitzes 2, also vom dem Wellenende 3 zugewandten Ende oder dem Wellenende 4 zugewandten Ende, aus erfolgen kann. Dies erfolgt durch Beaufschlagung der Rotorbleche 12 mit einer Axialkraft, wobei eine Drehung eines jeweiligen Rotorblechs 12 durch Entlanggleiten einer Innenkontur der Durchgangsöffnung 13 an einer Außenkontur des Paketsitzes 2 realisiert wird.

Dies hat den Vorteil, dass sich die Rotorbleche 12 durch die gegengleich ausgebildeten Polygonprofile selbstständig im Schrägungswinkel ausrichten, sodass auf ein aufwändiges Vorfädeln der Rotorbleche 12 vor dem eigentlichen Auffädeln des so gebildeten Rotorblechpaket vermieden werden kann.

Das Aufschrumpfen der Rotorbleche 12 auf die Welle 1 erfolgt analog zum ersten Ausführungsbeispiel des Verfahrens.

Bei beiden Ausführungsbeispiel elektrischen Maschine 20 gilt, dass der Winkel 11, also der Staffelungswinkel bzw. der Schrägungswinkel, zwischen 360°·(r-1) r⁻¹·Z⁻¹ und 360°·(r+1) r⁻¹·Z⁻¹ liegt, wobei r ≥ 2, insbesondere r ≥ 10, eine reelle Zahl ist. Beträgt die Anzahl der Statorzähne beispielsweise Z = 48 kann der Winkel 11 mithin 7,5° ± 3,25° bzw. 7,5° ± 0,75° betragen.

Gemäß einem weiteren Ausführungsbeispiel der Welle, das im Übrigen einem der zuvor beschriebenen Ausführungsbeispiele entspricht, und einem weiteren Ausführungsbeispiel des Rotorblechs, das im Übrigen dem Ausführungsbeispiel gemäß Fig. 3 entspricht, ist das Polygonprofil ein P4C-Profil gemäß DIN 32712. Hierbei ist ein Innenviereck statt eines Innendreiecks einbeschrieben.

Gemäß einem weiteren Ausführungsbeispiel der elektrischen Maschine, das im Übrigen einem der zuvor beschriebenen Ausführungsbeispiele entspricht, ist die elektrische Maschine eine fremderregte Synchronmaschine.

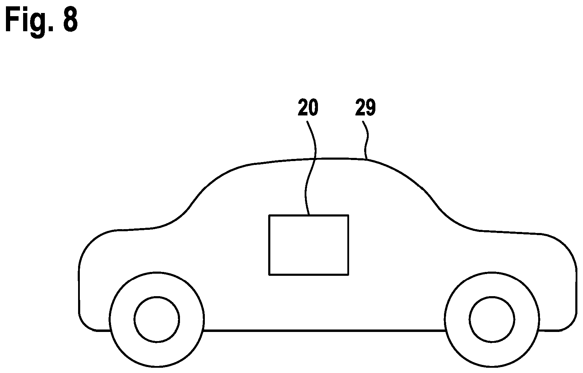

Fig. 8 ist eine Prinzipskizze eines Ausführungsbeispiels eines Fahrzeugs 29, umfassend eine elektrische Maschine 20 gemäß einem der zuvor beschriebenen Ausführungsbeispiele. Die elektrische Maschine 20 ist dazu eingerichtet, das Fahrzeug 29 anzutreiben. Das Fahrzeug kann ein Elektrofahrzeug (BEV) oder ein Hybridfahrzeug sein.

## Patentansprüche

1. Welle (1) für eine elektrische Maschine (20), umfassend einen Paketsitz (2) für ein Blechpaket (24) und zwei sich vom Paketsitz (2) in entgegengesetzte Richtungen axial nach außen erstreckende Wellenenden (3, 4), wobei
der Paketsitz (2) wenigstens einen sich in axialer Richtung erstreckenden Paketsitzabschnitt (5, 6) mit einem Polygonprofil zur Ausbildung einer Polygonverbindung mit dem Blechpaket (24) aufweist, wobei
ein regelmäßiges Innen-N-eck (15) mit N ≥ 3 in das Polygonprofil einbeschrieben ist und das Polygonprofil in einen Umkreis (16), den jede Ecke (17) des Innen-N-ecks (15) berührt, einbeschrieben ist, wobei
ein zum Umkreis (16) konzentrischer Inkreis (18) in das Polygonprofil einbeschrieben ist und auf einer jeweiligen Seite des Innen-N-eck (15) eine Sehne des Inkreises verläuft,
**dadurch gekennzeichnet, dass**
der Paketsitz (2) einen ersten Paketsitzabschnitt (5) und einen zweiten Paketsitzabschnitt (6), die sich jeweils in axialer Richtung erstrecken und das Polygonprofil aufweisen, umfasst und die Paketsitzabschnitte (5, 6) dabei in Umfangsrichtung zueinander versetzt sind.

2. Welle nach Anspruch 1, wobei
das Polygonprofil ein P3G-Profil oder ein P4C-Profil ist.

3. Welle nach Anspruch 2, wobei
eine Gerade (8, 9), die in axialer Erstreckung eines jeweiligen Paketsitzabschnitts (5, 6) auf einer der Ecken (17) liegt, parallel zur Mittelachse (A) der Welle (1) liegt.

4. Welle nach Anspruch 3, wobei
eine Schraubenkurve (10), die an einem jeweiligen Paketsitzabschnitt (5, 6) die Ecke (17) an einer mittigen Axialposition des Paketsitzabschnitts (5, 6) berührt, mit der Geraden (8, 9) einen Winkel (11) einschließt.

5. Rotor (23) für eine elektrische Maschine (20), umfassend eine Welle (1) nach einem der Ansprüche 1 bis 4 und ein aus geschichteten Rotorblechen (12) gebildetes Rotorblechpaket (24), welches eine mittige Durchgangsöffnung (13) mit einem Polygonprofil, welches gegengleich zu jenem einer Welle nach einem der vorhergehenden Ansprüche ist, aufweist, wobei die mittigen Durchgangsöffnungen (13) eines jeweiligen Rotorblechs (12) auf dem jeweiligen Paketsitzabschnitt (5, 6) aufsitzen.

6. Verfahren zur Herstellung eines Rotors (23) nach Anspruch 5, wobei die Durchgangsöffnungen (13) eines jeweiligen Rotorblechs (12) über den jeweiligen Paketsitz (2) geführt werden.

7. Elektrische Maschine (20), umfassend einen Rotor (23) nach Anspruch 5 oder einen durch das Verfahren nach Anspruch 6 erhaltenen Rotor (23), wobei der Rotor (23) drehbar innerhalb eines Stators (21) der elektrischen Maschine (20) gelagert ist.

8. Elektrische Maschine nach Anspruch 7, wenn abhängig von Anspruch 4 oder 5,
wobei der Stator Z Statorzähne (22) aufweist und der Winkel (11) zwischen 360°·(r-1) r⁻¹·Z⁻¹ und 360°·(r+1) r⁻¹·Z⁻¹ liegt, wobei r ≥ 2, insbesondere r ≥ 10, eine reelle Zahl ist.

9. Fahrzeug (29), umfassend eine elektrische Maschine (20) nach Anspruch 7 oder 8, die zum Antreiben des Fahrzeugs (29) eingerichtet ist.

## Claims

1. Shaft (1) for an electric machine (20), comprising a stack seat (2) for a laminated stack (24) and two shaft ends (3, 4) extending axially outward from the stack seat (2) in opposite directions, wherein
the laminated core seat (2) has at least one laminated core seat section (5, 6) extending in the axial direction with a polygonal profile for forming a polygonal connection with the laminated core (24) , wherein
a regular inner N-corner (15) with N ≥ 3 is inscribed in the polygon profile and the polygon profile is inscribed in a circumference (16) that touches each corner (17) of the inner N-corner (15), wherein
a circle inscribed in the polygon profile is concentric with the circumference (16), and a chord of the inscribed circle runs on a respective side of the inner N-corner (15)
**characterized in that**
the package seat (2) comprises a first package seat section (5) and a second package seat section (6), which each extend in the axial direction and have a polygon profile, and the package seat sections (5, 6) are offset from each other in the circumferential direction.

2. Shaft according to claim 1, wherein
the polygonal profile is a P3G profile or a P4C profile.

3. Shaft according to claim 2, wherein
a straight line (8, 9) lying on one of the corners (17) in the axial extension of a respective package seat section (5, 6) is parallel to the center axis (A) of the shaft (1).

4. Shaft according to claim 3, wherein
a helical curve (10) which, at a respective packet seat section (5, 6), contacts the corner (17) at a central axial position of the packet seat section (5, 6) forms an angle (11) with the straight line (8, 9).

5. Rotor (23) for an electric machine (20), comprising a shaft (1) according to one of claims 1 to 4 and a rotor laminations package (24) formed from laminated rotor laminations (12) (24) formed from laminated rotor sheets (12), which has a central through-opening (13) with a polygonal profile that is opposite to that of a shaft according to one of the preceding claims, wherein the central through-openings (13) of a respective rotor sheet (12) rest on the respective stack seat section (5, 6).

6. Method for manufacturing a rotor (23) according to claim 5, wherein the through openings (13) of a respective rotor plate (12) are guided over the respective stack seat (2) .

7. An electric machine (20) comprising a rotor (23) according to claim 5 or a rotor (23) obtained by the method according to claim 6, wherein the rotor (23) is rotatably mounted within a stator (21) of the electric machine (20).

8. Electric machine according to claim 7, if dependent on claim 4 or 5, wherein the stator has Z stator teeth (22) and the angle (11) between 360°·(r-1) r⁻¹ ·Z¹ and 360°·(r+1) r⁻¹ ·Z⁻¹ lies between 360°·(^{r 1)}r⁻¹ ·Z⁻¹ and 360°·(r+1) r⁻¹·Z⁻¹ , wherein r ≥ 2, in particular r ≥ 10, is a real number .

9. Vehicle (29) comprising an electric machine (20) according to claim 7 or 8, which is arranged to drive the vehicle (29).

## Revendications

1. Arbre (1) pour une machine électrique (20), comprenant un siège de paquet (2) pour un paquet de tôles (24) et deux extrémités d'arbre (3, 4) s'étendant axialement vers l'extérieur à partir du siège de paquet (2) dans des directions opposées, dans lequel
le siège de paquet (2) présente au moins une section de siège de paquet (5, 6) s'étendant dans la direction axiale avec un profil polygonal pour former une liaison polygonale avec le paquet de tôles (24) , où
un N-angle intérieur régulier (15) avec N ≥ 3 est inscrit dans le profil polygonal et le profil polygonal est inscrit dans un périmètre (16) que touche chaque coin (17) du N-angle intérieur (15), où
un cercle intérieur (18) concentrique au cercle extérieur (16) est inscrit dans le profil polygonal, et une corde du cercle intérieur s'étend sur un côté respectif du N-coin intérieur (15).
**caractérisé en ce que**
le siège de paquet (2) comprend une première section de siège de paquet (5) et une deuxième section de siège de paquet (6), qui s'étendent chacune dans la direction axiale et présentent un profil polygonal, et les sections de siège de paquet (5, 6) sont décalées l'une par rapport à l'autre dans la direction circonférentielle.

2. arbre selon la revendication 1, dans lequel
le profil polygonal est un profil P3G ou un profil P4C.

3. Arbre selon la revendication 2, dans lequel
une droite (8, 9) située sur l'un des coins (17) dans l'extension axiale d'une section de siège de paquet respective (5, 6) est parallèle à l'axe central (A) de l'arbre (1).

4. Arbre selon la revendication 3, dans lequel
une courbe hélicoïdale (10) qui, sur une partie de siège de paquet respective (5, 6), touche le coin (17) à une position axiale centrale de la partie de siège de paquet (5, 6), forme un angle (11) avec la ligne droite (8, 9).

5. Rotor (23) pour une machine électrique (20), comprenant un arbre (1) selon l'une quelconque des revendications 1 à 4 et un paquet de tôles rotoriques (24) formé de tôles rotoriques (12) empilées, présentant une ouverture centrale traversante (13) ayant un profil polygonal opposé à celui d'un arbre selon l'une quelconque des revendications précédentes, les ouvertures centrales traversantes (13) d'une tôle rotorique (12) respective étant en appui sur la portion de logement de paquet (5, 6) respective.

6. Procédé de fabrication d'un rotor (23) selon la revendication 5, dans lequel les ouvertures de passage (13) d'une tôle de rotor (12) respective sont guidées sur le siège de paquet (2) respectif .

7. Machine électrique (20) comprenant un rotor (23) selon la revendication 5 ou un rotor (23) obtenu par le procédé selon la revendication 6, le rotor (23) étant monté rotatif à l'intérieur d'un stator (21) de la machine électrique (20).

8. Machine électrique selon la revendication 7, si elle dépend de la revendication 4 ou 5,
dans lequel le stator Z comporte des dents statoriques (22) et l'angle (11) est compris entre 360°·(r-1) r^{(-1) ·Z-1}et 360°·(r+1) r^{(-1) ·Z-1}, où r ≥ 2, notamment r ≥ 10, est un nombre réel .

9. Véhicule (29) comprenant une machine électrique (20) selon la revendication 7 ou 8, agencée pour propulser le véhicule (29).
